# EUROPEAN PATENT SPECIFICATION

(11) **EP 4 516 063 B1**
(45) Date of publication and mention of the grant of the patent: **24.12.2025**
(21) Application number: 23721372.3
(22) Date of filing: 21.04.2023
(51) Int. Cl.: H04W 84/18

(54) **A METHOD OF ASSOCIATING A FIRST TYPE OF NODE DEVICE AND A SECOND TYPE OF NODE DEVICE IN A NETWORK**
VERFAHREN ZUM ZUORDNEN EINES ERSTEN TYPS VON KNOTENVORRICHTUNG UND EINES ZWEITEN TYPS VON KNOTENVORRICHTUNG IN EINEM NETZ
PROCÉDÉ PERMETTANT D'ASSOCIER UN PREMIER TYPE DE DISPOSITIF DE NOEUD ET UN SECOND TYPE DE DISPOSITIF DE NOEUD DANS UN RÉSEAU

(30) Priority: 27.04.2022 WO PCT/CN2022/089593; 02.06.2022 EP 22177012
(43) Date of publication of application: 05.03.2025
(73) Proprietor: Signify Holding B.V., 5656 AE Eindhoven (NL)
(72) Inventor: HUANG, Zhan, 5656 AE Eindhoven (NL); WU, Lili, 5656 AE Eindhoven (NL)
(74) Representative: Verweij, Petronella Daniëlle
(86) International application number: PCT/EP2023/060413
(87) International publication number: WO 2023/208758

(56) References cited:
- US-A1- 2004 132 410
- US-A1- 2010 329 225
- US-A1- 2013 107 909

## Description

### TECHNICAL FIELD

The present disclosure generally relates to the field of commissioning of node devices in a network, more particularly, to a method of associating a first type of node device and a second type of node device in a network, a lighting device and a sensing device to be associated according to the method.

### BACKGROUND

Electric or electronic devices, such as lighting devices and Internet of Things, IoT, devices, and devices supporting enhanced Machine-Type Communication, eMTC, for example, all of which comprise data communication capabilities, are frequently deployed in networks comprised of a plurality of interconnected devices.

These devices, generally called node devices or terminal devices, typically operate a long range communication interface, such as a network adapter or a transceiver module, for data exchange with remote devices, such as a backend server, and a short range communication interface, such as a transceiver module, for communication between node devices only, also called inter-node device communication.

The long range communication interface may operate in accordance with a wireless mobile communication standard, such as designated 2G/3G/4G/5G cellular communication, and other long-range wireless communication technologies like Long Range Wide Area Network, LoRaWAN, and Narrowband IoT, NB-IoT, or proprietary communication technologies, and/or a wired data exchange communication technology, for example.

The short range communication interface may operate in accordance with a network protocol for exchanging data by networked devices or nodes, such as designated ZigBee^{™}, Bluetooth^{™}, as well as WiFi based protocols for wireless networks, and wired bus networks such as DALI^{™} (Digital Addressable Lighting Interface), DSI (Digital Serial Interface), DMX (Digital Multiplex), KNX (and KNX based systems), and proprietary communication technologies and protocols, for example.

A lighting system, for example, in particular an outdoor lighting system such as a parking lighting system, may comprise a large number of node devices arranged as luminaires or lighting devices. In addition, the system may comprise other type of node devices such as sensing devices which are necessary for the implementation of more advanced services such as light on demand service.

For the lighting system to function properly, after installing the node devices, all node devices have to be commissioned so as to allow the node devices of different types to interact with each other according to the designed application. Such interaction may for example comprise a lighting device getting triggered appropriately, based on trigger messages received from sensing devices within a defined lighting range of the lighting device which detect the presence of a pedestrian or a vehicle.

A presently available commissioning procedure involves a specially trained field engineer traveling to the site where the lighting system is deployed and configuring sensors and lighting devices in a same network. For a parking lighting system with hundreds of luminaires, the commissioning procedure will take up to a whole day or even longer time. This high cost in terms of human resource, time and travel expenses poses an obstacle in the deployment of the lighting system.

US20130107909A1 discloses coordinating communications on multi-path radio transmission mesh networks include evaluating available path metrics to ensure the best available connection routes through the network.

US20140132410A1 discloses a method using priori information of the interferers such as channel structure, channel frequency and channel bandwidth to identify interferers in a radio communication band. Measured RSSI made at multiple frequencies within a channel of the interferer can be used to detect and identify interferers.

In consideration of the above, there is a genuine need of a method of associating a first type of node device such as a luminaire and a second type of node device such as a motion sensor in a network in a cost effective way in terms of both time, human resources and other expenses.

### SUMMARY

In a first aspect of the present disclosure, there is presented a method of associating a first type of node device and a second type of node device in a network according to claim 1.

The present disclosure is based on the insight that an association between a first type of node device and a second type of node device deployed in the same network may be determined automatically by the first type of node device based on a percentage of signals, received from the second type of node device, which have a signal strength level higher than a defined signal strength level threshold.

The method as proposed by the present disclosure therefore involves a first type of node device receiving a number of signals from the second type of node device. The signals may be received in a short period of time or spread over a relatively longer period of time. **In** the latter case, the first type of node device "accumulates" signals or messages from the second type of node device.

A person skilled in the art will appreciate that each signal received from the second type of node device has a signal strength level which is influenced by various factors including a distance between the first type of node device and the second type of node device and possible interference sources in the surrounding environment.

When the required number of signals are received from the second type of node device, the first type of node device then calculates a percentage of received signals with a signal strength level higher than a predetermined signal strength threshold. The percentage can indirectly indicate a distance between the first type of node device and the second type of node device, as the signal strength level is influenced by such a distance.

For ensuring that an association is appropriately made, the method further compares the calculated percentage with a threshold percentage. The first type of node device and the second type of node device are associated with each other only when the calculated percentage is higher than the threshold percentage.

Associating a first type of node device with a second type of node device means that the first type of node device is configured to react or respond to messages from the second type of node device, by for example performing a certain function such as lighting up, if the first type of node device is a lighting device.

The method as described above allows a first type of node device, such as a lighting device in a network, to automatically associate itself with a second type of node device, such as a motion sensor deployed in the same network, based on calculations performed on signals received from the second type of node device. The association enables the first type of node device and the second type of node device to interact with each other so as to realize an application designed for the network.

The method enables a first node device to get associated with a second node device automatically, without the need of a special commissioning process as described above in the background section. It helps to reduce the overall investment needed for the network such as a lighting system, which facilitates easy application of the lighting system and benefits the business promotion of more advanced applications such as light-on-demand service.

Excellent distance control is realized by the method described above by way of two thresholds, that is, the signal strength level threshold and the percentage threshold. It ensures that the second type of node device is associated with the first type of node device only when the signal strength level of the signals that it transmits to the first type of device is constantly higher than the signal strength level threshold.

According to the invention, the method further comprises the steps of:
- comparing a signal strength level of a further signal received from the second type of node device,
- determining that the signal strength level of the received further signal is different from signal strength levels of previously received signals by at least a determined amount;
- repeating the steps of calculating and associating for a second number of signals from the second type of node device.

An existing association between the first type of node device and the second type of node device may need to be re-evaluated and reassociated/de-associated due to various reasons, such as due to deployment of further devices in the network, or adjustment of response or reaction distance configured for the first and second type of node devices, or the position change of the first and/or second type of node devices. In this case, the re-evaluation can be triggered by receiving a further signal with a signal strength level which is different from that of previously received signals by at least a determined amount.

The reassociation (and possibly de-association) can be performed based on a same, larger or even smaller number of signals from the second type of node device.

For verifying an existing association to ensure that the association is correct and stable, the re-evaluation and reassociation can be based on a larger number of signals from the second type of node device. The accuracy and reliability of the reassociation can thereby get improved. Such reassociation helps to ensure that the association between the first type of node device and the second type of node device remains stable and reliable.

In an example of the present disclosure, the further signal is received from the second type of node device as a result of a transmitting power adjusting switch of the second type of node device being operated.

It can happen that the owner of the network would like to adjust the response or reaction distance or range between the first type of node devices and the second type of node devices, this is realized by generally adjusting transmitting powers of the second type of node devices. Such adjustment can be realized by operating a transmitting power adjusting switch of the second type of node device. As an example, reducing the transmitting power of a second type of node device allows first type of node devices to associate with and therefore respond to second type of node devices within a smaller range.

In an example of the present disclosure, the first and second number of signals are received from the second type of node device continuously as a result of a control button of the second type of node device being operated.

It can be contemplated by those skilled in the art that the method may be performed by the first type of node device "accumulating" the required number of signals from the second type of node device over a long time. On the other hand, a more efficient way of performing the method is to operate a control button on the second type of node device such that the first or second number of signals are transmitted continuously in a relatively short period, such as several minutes. This is especially advantageous for the configuration of the network right after the deployment of the node devices.

In an example of the present disclosure, the method further comprises the steps of:
- ranking a plurality of signals respectively received from a plurality of second type of node devices to be associated with the first type of node devices in descending order according to signal strength levels of the plurality of signals;
- associating the first type of node devices with a limited number of highest ranking second type of node devices of the plurality of second type of node devices.

This helps to limit a maximum number of second type of node devices that the first type of node device may react. It ensures that the first type of node device would react only to second type of node devices within a reasonable range, which can prevent overlong distance reaction which is neither necessary nor desired.

A skilled person will understand that the plurality of signals respectively received from the plurality of second type of node devices to be associated with the first type of node devices may also be ranked in ascending order. In that case, a limited number of lowest ranking second type of node devices get associated with the first type of node device.

In an example of the present disclosure, each first type of node device is configured to communicate with each second type of node device by way of a preconfigured device credential.

Though theoretically the second type of node device and the first type of node device may be manufactured by different parties, in practice, a more favorable application scenario is that both type of node devices are from a same supplier, which allows the first type and second type of node devices to be preconfigured with a common credential such as a common device key. Such device key makes it possible to eliminate any commissioning requirement that involving human interference totally for the network comprising the first and second type of node devices. It is especially beneficial in saving cost for configuring the network comprising a large number of node devices such as a big parking place with many lighting devices and motion sensors.

In an example of the present disclosure, the wireless communication module of the first and second type of node devices comprises a Zigbee module or a Bluetooth Low Energy, BLE, module.

It will be appreciated by those skilled in the art that wireless communication modules operating according to suitable short range wireless communication protocols such as listed above can be implemented conveniently in the node devices at reasonable cost, without the need of any specially designed communication modules.

In an example of the present disclosure, the signal strength level comprises a receive signal strength indicator, RSSI.

This is a parameter generally used to represent a signal strength level of a signal, which can be used conveniently in the present disclosure.

In an example of the present disclosure, the first type of node devices comprise lighting devices and the second type of node devices comprise sensing devices, in particular, motions sensors.

A particularly interesting application scenario of the method of the present disclosure is a lighting network involving both lighting devices and other type of devices that have to interact with the light devices. Such a lighting system can operate according to the method of the present disclosure without the need of high cost involved for commissioning.

A second aspect of the present disclosure provides a lighting device arranged to be deployed as a first type of node device in a network comprising a plurality of first type of node devices and a plurality of second type of node devices operatively interconnected with each other and to perform the method according to the first aspect of the present disclosure.

A third aspect of the present disclosure provides a network system comprising a plurality of first type of node devices and a plurality of second type of node devices operatively interconnected with each other, each first type of node device and each second type of node device comprising a wireless communication module, each first type of node device configured to communicate with each second type of node device by way of a preconfigured device key, wherein a first type of node device is arranged to be associated with a second type of node device according to the method according to the first aspect of the present disclosure.

In an example of the present disclosure, the network system comprises a lighting system, the first type of node devices comprise lighting devices, the second type of node devices comprise sensing devices.

In an example of the present disclosure, the sensing devices comprise motions sensors.

A fourth aspect of the present disclosure provides a computer program product, comprising a computer readable storage medium storing instructions which, when executed on at least one processor, cause said at least one processor to carry out the method according to the first aspect of the present disclosure.

The above mentioned and other features and advantages of the disclosure will be best understood from the following description referring to the attached drawings. In the drawings, like reference numerals denote identical parts or parts performing an identical or comparable function or operation.

### BRIEF DESCRIPTION OF THE DRAWINGS

Fig. 1 schematically illustrates a network comprising a plurality of first type of node devices and a plurality of second type of node devices to be associated according to the present disclosure.
Figs. 2 schematically illustrates an embodiment of sensing device arranged for operating in a network of operatively interconnected node devices, configured in accordance with the present disclosure.
Fig. 3 schematically illustrates, in a flow chart type diagram, an embodiment of a method of associating a first type of node device and a second type of node device in a network as illustrated in Fig. 1, according to the present disclosure.
Fig. 4 schematically illustrates an embodiment of a lighting device arranged for performing the association method according to the present disclosure.

### DETAILED DESCRIPTION

Embodiments contemplated by the present disclosure will now be described in more detail with reference to the accompanying drawings. The disclosed subject matter should not be construed as limited to only the embodiments set forth herein. Rather, the illustrated embodiments are provided by way of example to convey the scope of the subject matter to those skilled in the art.

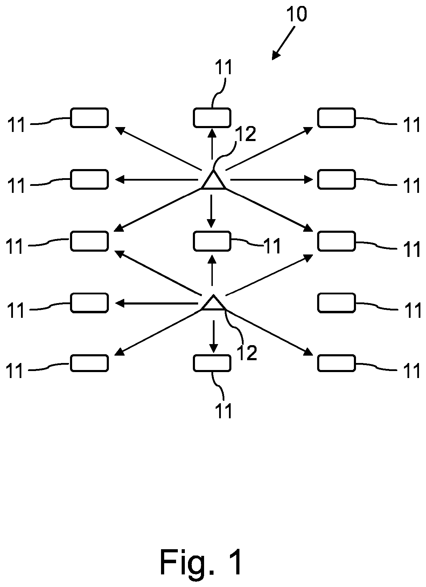

Figure 1 schematically illustrate a network 10 comprising a plurality of first type of node devices 11 and a plurality of second type of node devices 12. The network 10 may be for example a lighting system for a parking place such as an outdoor parking space with many lighting devices 11. The lighting system 10 may further comprise a plurality of motion sensors 12 such that light-on-demand application may be implemented, which will help to save power consumption as well as related cost for power needed for lighting the parking space.

It can be contemplated by those skilled in the art that the second type of node device may comprise other sensors such as acoustic sensor, ambient sensors such as temperature and humidity sensors, cameras and so on, depending on the service and application that is designed for the network to provide.

For a lighting system providing light on demand service, motion sensors, which may be deployed as the second type of node devices, triggers a number of lighting devices or luminaires, deployed as the first type of node devices, within a certain distance, such as within communication range of a motion sensor. As an example, when a motion sensor detects the presence of a pedestrian or vehicle in its sensing range, the motion sensor transmits a message to several lighting devices in its neighborhood such that the lighting devices turn on, allowing the pedestrian or driver of the vehicle to see the surrounding clearly.

In the meantime, one luminaire or lighting device can react or respond to several motion sensors arranged at a certain distance from the luminaire or lighting device. Normally a luminaire decides whether to switch on based on a receive signal power of the message or signal that it receives from a motion sensor, which is generally inversely related to a distance between the luminaire and the motion sensor.

Both the lighting devices and the sensors are configured with communication modules, such as for example a Radio Frequency, RF, transceiver module, enabling the lighting devices and the sensor to communicate with each other.

When both the lighting devices and the motion sensors are manufactured by the same manufacturer, the lighting devices and the motion sensors may be preconfigured with a common device key such that they can communicate with each other once installed and powered up.

When the mention sensors come from a third party, the lighting devices and the motion sensors may be configured after instalment to allow them to communicate with each other by way of for example a shared device key.

It can be understood by those skilled in the art that the communication module of a lighting device, such as a RF module integrated on a driver of a luminaire, normally has a sensitivity of for example lower than -90dBm. In the present disclosure, a threshold value of a signal strength level of a signal received by the lighting device from the sensing device is designed to be much higher, such as for example -66dBm, than a lower limit of the sensitivity of the RF module of the lighting device. It means that although the RF module of the lighting device will receive most signals from sensing device in a target distance range, the lighting device will only react or respond or get triggered after a received signal strength judgement or evaluation.

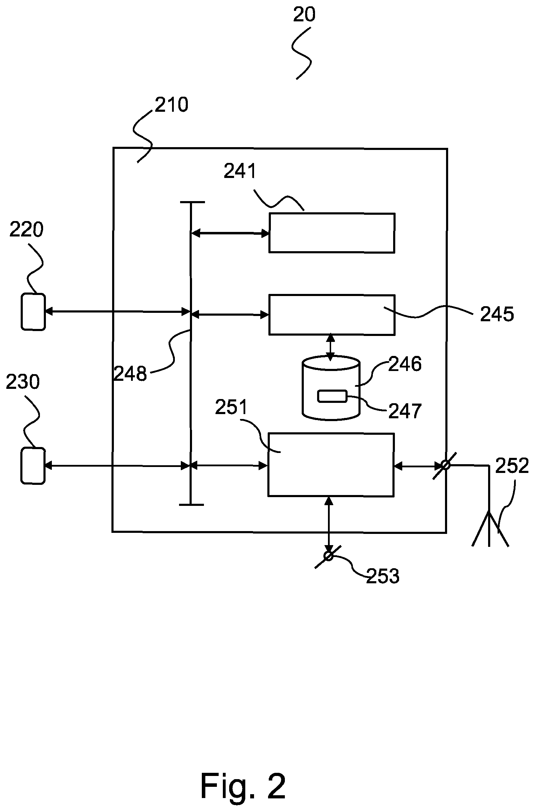

Figure 2 schematically illustrates an embodiment of sensing device 20 arranged for operating in a network of operatively interconnected node devices, configured in accordance with the present disclosure.

The sensing device 20 comprises a main sensing device 210 which comprises a sensing element 241. Depending on the sensing technologies used, the sensing element 241 may comprise for example a microwave transceiver or an ultrasonic transducer.

The main device 210 of the sensing device 20 operates a short range communication interface 251, such as a network adapter or transceiver module implemented for example as a part of a MCU and arranged for short-range wireless 252 or wired 253 exchange of messages or data packets with another node device in the network, such as a lighting device. Network protocols for exchanging data by networked devices or nodes may comprise ZigBee^{™}, Bluetooth^{™}, as well as WiFi based protocols for wireless networks, and wired bus networks such as DALI^{™} (Digital Addressable Lighting Interface), DSI (Digital Serial Interface), DMX (Digital Multiplex), and KNX (or KNX based systems), and other proprietary protocols.

The main device 210 of the sensing device 20 further comprises at least one microprocessor, µP, or controller 245, and at least one data repository or storage or memory 246, among others for storing address information of the sensing device itself and other node devices, such as identifiers 247, IDs, Media Access Control, MAC, addresses and subscriber information of node devices. The repository 246 also stores a network credential for a network comprising the sensing device 20. Instead of the repository 246, a separate memory or storage accessible to the at least one processor or controller 245 may be provided.

The at least one microprocessor or controller 245 communicatively interacts with and controls the sensing element 241, the short communication interface 251, and the at least one repository or storage 246 via an internal data communication and control bus 248 of the main device 210 of the sensing device 20.

For example, the microprocessor or controller 245 receives signals from the sensing element 241 and determines whether an object is present in proximity to the sensing device 20. When an object is detected, the microprocessor or controller 245 controls the short communication interface 251 such that a signal or message is transmitted to another node device such as a lighting device in the network so that the lighting device will switch on.

The sensing device 20 further comprises a transmitting power adjusting switch 230 which is connected to the short communication interface 251 via the internal data communication and control bus 248. The transmitting power adjusting switch 230 is designed to change the transmitting power, that is, the transmitted signal strength, of the sensing device 20, which allows the interaction or reaction distance between the sensing device 20 and the lighting device in the network to be adjusted when needed.

It will be described later herein that, according to the present disclosure, the sensing device with a transmitting power different from a previous transmitting power will be recognized as a new device by a lighting device associated with the sensing device, which will cause the association to get evaluated and accordingly associated again or de-associated.

The sensing device 20 further comprises a control button 220 which is referred to as a learning button herein and is connected to microprocessor or controller 245 via the internal data communication and control bus 248. The leaning button 220 is design to be arranged on a surface of the sensor device 20. When the leaning button 220 is pressed, the sensing device 20 will transmit or send out thousands of signals continuously in a short period, such that an association procedure according to the present disclosure as described below will get accelerated.

According to an exemplary algorithm, when the control button 220 is pressed, the sensing device will send 100 signals together with 3 start signals and 3 end signals, in a time period lasting 1minute 46 second. It can thereby help quick association or commissioning. The association can be updated by signals collected over a further long-time real operation period.

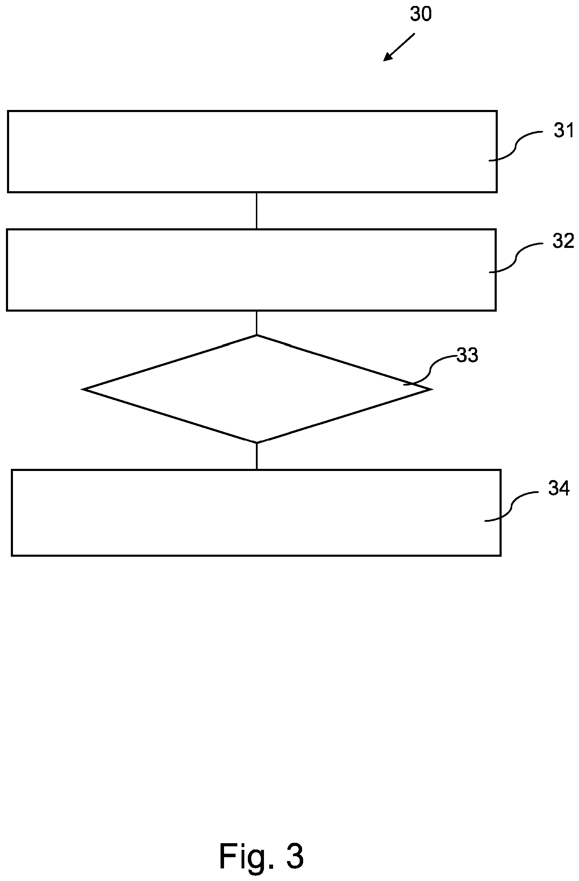

Figure 3 schematically illustrates, in a flow chart type diagram, an embodiment of a method of associating a first type of node device and a second type of node device in a network as illustrated in Figure 1, according to the present disclosure.

The network comprising the first type of node devices and the second type of node devices are installed and powered up. The first type of node devices and the second type of node devices may be from a same supplier. In this case, each first type of node and each second type of node device are preconfigured to communicate with each other automatically after being powered on. If the first type of node devices and the second type of node devices are from different suppliers, a first type of node device and a second type of node device will be configured to communicate with each other using a shared security key after being powered up.

Referring to Figure 3, at step 31, a first type of node device, such as a lighting device in a lighting system, receives a number of signals, such as broadcast messages, from a second type of node device, such as a sensing device like a motion sensor. It can be contemplated by those skilled in the art that each signal from the second type of node device has a signal strength level, such as a receive signal strength indicator, RSSI.

The signal strength level of the received signals represents and is affected by a distance between the first type of node device and the second type of node devices. It will be used by the first type of node device to determine whether to associated with the second type of node device or not.

Associating the first type of node device and the second type of node device allows the first type of node device to react or respond or get triggered by a message received from the second type of node device. For optimal operation of a network like a lighting system, it is important appropriate distance control between the first type of node devices and the second type of node devices is realized, such that the first type of node devices may react to the second type of node devices within a reasonable range.

Normally it is configured that a signal or message is transmitted from the second type of node device to the first type of node device when a certain condition is met, such as when a motion sensor detects the presence of a pedestrian or a vehicle. In this case, it will take a long time for the first type of node device to receive or collect or accumulate enough signals, such as 500 signals, from the second type of node device, for it to determine whether an association with the second type of node device is needed.

With the sensing device 20 as described with reference to Figure 2, the control button 220 may be used to control the sensing device 20 such that a large number of signals will be transmitted to first type of node devices in a short period.

At step 32, the first type of node device calculates a percentage of received signals with a signal strength level higher than a predetermined signal strength threshold.

Normally the signal strength threshold is set to be sufficiently higher than a lower limit of the sensitivity of the first type of node device. This ensures that the first type of node device will only get triggered by strong enough signals from first type of node devices. It can be used to control the responding action such that the first type of node device does not get triggered by a too far second type of node device.

The first type of node device compares a signal strength level of each signal received from the second type of node device and counts the number of received signals having a signal strength level higher than the predetermined signal strength threshold. The first type of node device then determines the percentage of received signals with a signal strength level higher than the predetermined signal strength threshold.

At step 33, the first type of node device determines whether the calculated percentage is higher than a defined percentage threshold. If the result of determination is positive, at step 34, the first type of node device associates itself with the second type of node device. The association comprises configuring the first type of node device to react to messages from the second type of node device.

The percentage threshold may be selected based on the desired reaction or responding distance between the first type of node device and the second type of node device. It will be understood by those skilled in the art that a higher percentage threshold corresponds to a smaller reaction distance or range and vice versa. The percentage threshold may be set to for example 60%.

The above described method is referred to as an environment learning procedure performed by the first type of node device. In an example, the first type of node device is a lighting device or a luminaire. The lighting device, when being associated with such as a motion sensor, will add an address of the motion sensor to a "white list" that it maintains, which allows the lighting device to respond or react or get triggered by a message from the motion sensor.

Each first type of node device in the network is configured to perform the method as described above such that association between the first type of node devices and the second type of node devices in the network is automatically established in an efficient way. There is no need for commissioning performed by specially trained field engineers, which helps to save the cost of the whole system significantly.

It can be contemplated by those skilled in the art that a first type of node device may be associated with several second type of node devices. For the purpose of ensuring that more accurate and stable association is made, a first type of node devices may rank a plurality of signals respectively received from a plurality of second type of node devices in descending order according to signal strength levels of the plurality of signals and only associated with a limited number of highest ranking second type of node devices of the plurality of second type of node devices. This is advantageous when long-distance responding or reaction is to be avoided.

When the physical environment of network comprising the first and second type of node devices the is stable, the association between the first type of node devices and the second type of node devices such as the sensor-luminaire mapping will be stable.

The association or mapping may be updated and re-evaluated by using a larger number of signals received from the second type of node device. In real life applications, a lighting device will record all received signals strength, and calculate and adjust the white list of sensors, in a separate associating procedure at a later stage, such as with more signals like 1000 signals.

For example, the number of signals used for the above described association method may start from 100, and get increased to 500 and then to 1000 later on step by step, so as to make the association more accurate and stable.

When the second type of node device is a sensing device 20 as described above, the transmitting power adjusting switch 230 of the sensing device may be used to adjust the transmitting power of the sensing device, which allows the reaction or responding distance between the lighting device and the sensing device to be controlled and adjusted when needed.

It is noted that a sensing device with a different transmitting power will be treated as a new device, therefore the association will be performed once again, possibly based on a larger number of signals received from the sensing device.

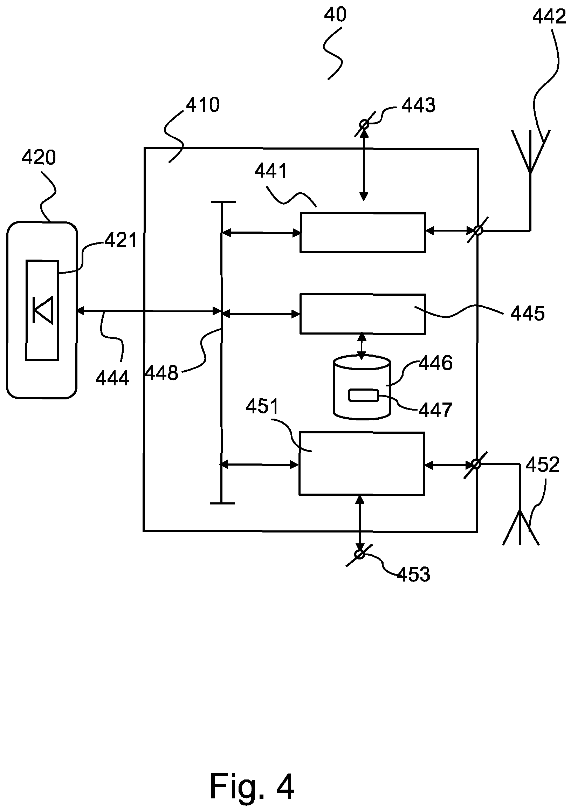

Fig. 4 schematically illustrates an embodiment of a first type of node device 40 arranged for operating in a network of operatively interconnected node devices, configured in accordance with the present disclosure.

The node device 40 comprises a control part or control device 410 and a load such as a lighting fixture or lighting device 420, comprising a lighting module 421, preferably a Light Emitting Diode, LED, lighting module or a plurality of LED lighting modules, operation of which may be controlled by the control device 410 from or through a remote control device, such as a remote or backend server (not shown), for example.

The control device 410 operates a long range communication interface 441, such as a first network adaptor or a transceiver, Tx/Rx 1, module, implemented for example as a part of a cellular modem and arranged for direct wireless message exchange or data packets 442 with a remote control device or backend server. The long range communication interface 441 typically operates according to a mobile communication system technology in a licensed frequency band, such as 2G/3G/4G/5G cellular communication, and other long-range wireless communication technologies, such as known as LoRaWAN communication, for example. However, the long range communication interface 441 may also operate according to a proprietary wireless communication protocol or technology.

The long range communication interface 441 may also be arranged for wired message exchange 443, such as for data exchange over an Ethernet connection and the Internet, or the like.

The control device 410 further operates a short range communication interface 451, such as a second network adapter or transceiver, Tx/Rx 2, module implemented for example as a part of a MCU and arranged for short-range wireless 452 or wired 453 exchange of messages or data packets with another node device in the network, i.e. so called inter-node device communication. Network protocols for exchanging data by networked devices or nodes may comprise ZigBee^{™}, Bluetooth^{™}, as well as WiFi based protocols for wireless networks, and wired bus networks such as DALI^{™} (Digital Addressable Lighting Interface), DSI (Digital Serial Interface), DMX (Digital Multiplex), and KNX (or KNX based systems), and other proprietary protocols.

The control device 410 further comprises at least one microprocessor, µP, or controller 445, and at least one data repository or storage or memory 446, among others for storing address information of the node device itself and other node devices, such as identifiers 447, IDs, Media Access Control, MAC, addresses and subscriber information of node devices. The repository 446 also stores a network credential for a network comprising the node device 40. Instead of the repository 446, a separate memory or storage accessible to the at least one processor or controller 445 may be provided.

The at least one microprocessor or controller 445 communicatively interacts with and controls the long range communication interface 441, the short range communication interface 451, and the at least one repository or storage 446 via an internal data communication and control bus 448 of the control device 410.

When the node device 40 is deployed in a network as described with reference to the present disclosure, the at least one microprocessor or controller 445 may operate to perform the method described above.

The lighting fixture or lighting device 420 connects 444 to and is controlled from the data communication and control bus 448 by the at least one microprocessor or controller 410.

The method as described is applicable to various application scenarios involving a first type of node devices connected to a second type of node devices, such as a parking lighting system with motion sensors implementing lighting on demand service.

The following text will illustrate such a lighting system for parking application which includes a group of luminaires controlled by motion sensors.

Benefits of such lighting system include plug and play, no need debugging, no need network, no need software, no post-maintenance trouble, make energy-saving and emission reduction easier to come true. At the same time, according to customer's demand, In the field, the broadcast range of sensor detection signal, hold time of luminaire safety working illuminance and background level can be set by combination keys of sensor dial-up switch. Easy to achieve intelligent control and dimming, energy saving.

The illustration will be in two aspects of key elements of the lighting system and realization of the lighting system.

### Key elements of the lighting system

### Key system feature

In parking application, commissioning for grouping is not necessary, luminaires by default react sensor signal within certain distance range. A luminaire can be controlled by multiple sensors nearby. In a typical environment, the sensor default control distance is around 12-15m, since wireless signal is highly affected by environment, including materials, blockings, signal interference, the control distance may have a tolerance in different application cases and different directions.

### System parameters setting

1. Hold time: set hold time via dip switch
2. Background level: set background level via dip switch
3. Typical control distance: configure control distance via dip switch:

| | |
|---|---|
| Max High: | 12-15m |
| High: | 8-12m |
| Middle: | 5-8m |
| Low: | 3-5m |

Typical control distance is based on an indoor parking environment, without impact on sensor wireless signal (e.g., wireless interference, metal shielding etc.). Field environment impact may reduce or increase the control distance.

### Sensor-luminaire Auto Grouping

After luminaire and sensor installed and system started working, sensor will auto group luminaires around it, it approximately takes 1-3days to finish the auto grouping by default. Before Auto-grouping done, some luminaires may have random response when motion detected. After grouping done, sensor and luminaire will have solid wireless connection.

### Sensor-Luminaire Manual Grouping

Long press sensor button for 5-10 seconds will group/re-group sensor with luminaires, it takes around 2 min for grouping process. In one embodiment, only one sensor is allowed for manual grouping process at one time.

### Realization of the lighting system

### System Activation

Ecoset wireless luminaires activation: Luminaire by default is working at 100% light level, until it receives a motion signal from Ecoset wireless sensor installed nearby, luminaire starts to count hold time and dim down to 20% if no further motion signal received.

Ecoset wireless sensor activation: When sensor battery installed, it takes around 40 seconds for sensor startup, then short press sensor button, sensor will activate system feature after 1min. If not press sensor button, sensor will auto activate system feature after installing battery for 24hrs. Sensor should be activated after installation by short press sensor button, it will start luminaire auto grouping.

### System behavior

Luminaire out of factory, after installed and powered on, luminaire works at 100% light output continuously.

After sensor installed and activated nearby, luminaire will activate dimming function at the first time received motion signal from sensor. Luminaire will dim down if no motion signal received after hold time.

After luminaire activated, every time luminaire power on, it takes 2min for the system warmup and luminaire keeps at 100% light level, then start dim down function if no motion detected.

At low battery status, sensor will loss motion detection function, the indicator on sensor flash twice every 30 seconds.

If luminaire continues working at background level lasts for 24hrs, without receive any signal from motion sensor, the luminaire turns back to working at 100% light level.

System working behavior: Luminaire lights at 100% level when motion detected, and Luminaire dim to background level continuously after hold time with no motion detected.

The present disclosure is not limited to the examples as disclosed above, and can be modified and enhanced by those skilled in the art beyond the scope of the present disclosure as disclosed in the appended claims without having to apply inventive skills and for use in any data communication, data exchange and data processing environment, system or network.

## Claims

1. A method (30) of associating a first type of node device (11) and a second type of node device (12, 20) in a network (10), the network (10) comprising a plurality of first type of node devices (11) and a plurality of second type of node devices (12, 20) operatively interconnected with each other, each first type of node device (11) and each second type of node device (12, 20) comprising a wireless communication module, the method performed by a first type of node device (11) and comprising the steps of:
- receiving (31) a first number of signals each having a signal strength level from a second type of node device;
- calculating (32) a percentage of received signals with a signal strength level higher than a predetermined signal strength threshold; and
- associating (34) the first type of node device with the second type of node device if the percentage is higher than a threshold percentage by configuring the first type of node device to react to messages from the second type of node device;
wherein the method further comprises the steps of:
- comparing a signal strength level of a further signal received from the second type of node device,
- determining that the signal strength level of the received further signal is different from signal strength levels of previously received signals by at least a determined amount;
- repeating the steps of calculating (32) and associating (34) for a second number of signals from the second type of node device.

2. The method according to claim 1, wherein the further signal is received from the second type of node device as a result of a transmitting power adjusting switch (230) of the second type of node device being operated.

3. The method according to claim 1, the first and second number of signals are received from the second type of node device continuously as a result of a control button (220) of the second type of node device being operated.

4. The method according to claim 1, wherein the step of associating further comprises:
associating the first type of node devices with a number of second type of node devices by configuring the first type of node device to react to messages from each of the number of second type of node devices.

5. The method according to claim 4, further comprising the steps of:
- ranking a plurality of signals respectively received from a plurality of second type of node devices to be associated with the first type of node devices in descending order or ascending order according to signal strength levels of the plurality of signals;
- associating the first type of node devices with a limited number of highest or lowest ranking second type of node devices of the plurality of second type of node devices.

6. The method according to claim 1, wherein each first type of node device is configured to communicate with each second type of node device by way of a preconfigured device credential.

7. The method according to claim 1, wherein the wireless communication module of the first and second type of node devices comprises a Zigbee module or a Bluetooth Low Energy, BLE, module and the signal strength level comprises a receive signal strength indicator, RSSI.

8. The method according to claim 1, wherein the first type of node devices comprises lighting devices and the second type of node devices comprises sensing devices, in particular, motions sensors.

9. A lighting device arranged to perform the method according to any of the previous claims 1 to 8.

10. A network system (10) comprising a plurality of first type of node devices (11) and a plurality of second type of node devices (12) operatively interconnected with each other, each first type of node device (11) and each second type of node device (12) comprising a wireless communication module, wherein a first type of node device (11) is arranged to be associated with a second type of node device (12) according to the method of any of the previous claims 1 to 8.

11. The network system according to claim 10, the network system comprises a lighting system, the first type of node devices comprise lighting devices, the second type of node devices comprise sensing devices.

12. The network system according to claim 11, wherein the sensing devices comprise motions sensors.

13. A computer program product, comprising a computer readable storage medium storing instructions which, when executed on at least one processor comprised in a first type of node device, cause said first type of node device to carry out the method according to any of the previous claims 1 to 8.

## Patentansprüche

1. Verfahren (30) zum Zuordnen einer Knotenvorrichtung (11) eines ersten Typs und einer Knotenvorrichtung (12, 20) eines zweiten Typs in einem Netzwerk (10), wobei das Netzwerk (10) eine Vielzahl von Knotenvorrichtungen (11) des ersten Typs und eine Vielzahl von Knotenvorrichtungen (12, 20) des zweiten Typs umfasst, die operativ miteinander verbunden sind, wobei jede Knotenvorrichtung (11) des ersten Typs und jede Knotenvorrichtung (12, 20) des zweiten Typs ein Drahtloskommunikationsmodul umfasst, wobei das Verfahren durch eine Knotenvorrichtung (11) des ersten Typs durchgeführt wird und die folgenden Schritte umfasst:
- Empfangen (31) einer ersten Anzahl von Signalen, die jeweils einen Signalstärkepegel aufweisen, von einer Knotenvorrichtung des zweiten Typs;
- Berechnen (32) eines Prozentsatzes von empfangenen Signalen mit einem Signalstärkepegel, der über einem vorbestimmten Signalstärkeschwellenwert liegt; und
- Zuordnen (34) der Knotenvorrichtung des ersten Typs zu der Knotenvorrichtung des zweiten Typs, wenn der Prozentsatz höher als ein Schwellenprozentsatz ist, indem die Knotenvorrichtung des ersten Typs konfiguriert wird, um auf Nachrichten von der Knotenvorrichtung des zweiten Typs zu reagieren;
wobei das Verfahren ferner die Schritte umfasst:
- Vergleichen eines Signalstärkepegels eines weiteren Signals, das von der Knotenvorrichtung des zweiten Typs empfangen wird,
- Feststellen, dass sich der Signalstärkepegel des empfangenen weiteren Signals um mindestens einen bestimmten Betrag von den Signalstärkepegeln der zuvor empfangenen Signale unterscheidet;
- Wiederholen der Schritte des Berechnens (32) und des Zuordnens (34) für eine zweite Anzahl von Signalen von der Knotenvorrichtung des zweiten Typs.

2. Verfahren nach Anspruch 1, wobei das weitere Signal von der Knotenvorrichtung des zweiten Typs als Ergebnis der Betätigung eines Sendeleistungs-Einstellschalters (230) der Knotenvorrichtung des zweiten Typs empfangen wird.

3. Verfahren nach Anspruch 1, wobei die erste und die zweite Anzahl von Signalen von der Knotenvorrichtung des zweiten Typs kontinuierlich als Ergebnis der Betätigung einer Steuertaste (220) der Knotenvorrichtung des zweiten Typs empfangen werden.

4. Verfahren nach Anspruch 1, wobei der Schritt des Zuordnens ferner umfasst:
Zuordnen der Knotenvorrichtungen des ersten Typs zu einer Anzahl von Knotenvorrichtungen des zweiten Typs, indem die Knotenvorrichtung des ersten Typs konfiguriert wird, um auf Nachrichten von jeder der Anzahl von Knotenvorrichtungen des zweiten Typs zu reagieren.

5. Verfahren nach Anspruch 4, ferner umfassend die Schritte:
- Einstufen einer Vielzahl von Signalen, die jeweils von einer Vielzahl von Knotenvorrichtungen des zweiten Typs empfangen werden, die Knotenvorrichtungen des ersten Typs zuzuordnen sind, in absteigender oder aufsteigender Reihenfolge nach Signalstärkepegeln der Vielzahl von Signalen;
- Zuordnen der Knotenvorrichtung des ersten Typs zu einer begrenzten Anzahl von Knotenvorrichtungen des zweiten Typs mit dem höchsten oder niedrigsten Rang aus der Vielzahl von Knotenvorrichtungen des zweiten Typs.

6. Verfahren nach Anspruch 1, wobei jede Knotenvorrichtung des ersten Typs konfiguriert ist, um mit jeder Knotenvorrichtung des zweiten Typs über eine vorkonfigurierte Vorrichtungsberechtigung zu kommunizieren.

7. Verfahren nach Anspruch 1, wobei das Drahtloskommunikationsmodul der Knotenvorrichtungen des ersten und des zweiten Typs ein Zigbee-Modul oder ein Bluetooth Low Energy-Modul (BLE-Modul) umfasst und der Signalstärkepegel einen Empfangssignalstärkeindikator (RSSI) umfasst.

8. Verfahren nach Anspruch 1, wobei die Knotenvorrichtungen des ersten Typs Beleuchtungsvorrichtungen umfassen und die Knotenvorrichtungen des zweiten Typs Sensorvorrichtungen, insbesondere Bewegungssensoren, umfassen.

9. Beleuchtungsvorrichtung, die dafür ausgelegt ist, das Verfahren nach einem der vorstehenden Ansprüche 1 bis 8 durchzuführen.

10. Netzwerksystem (10), umfassend eine Vielzahl von Knotenvorrichtungen (11) des ersten Typs und eine Vielzahl von Knotenvorrichtungen (12) des zweiten Typs, die operativ miteinander verbunden sind, wobei jede Knotenvorrichtung (11) des ersten Typs und jede Knotenvorrichtung (12) des zweiten Typs ein Drahtloskommunikationsmodul umfasst, wobei eine Knotenvorrichtung (11) des ersten Typs gemäß dem Verfahren nach einem der vorstehenden Ansprüche 1 bis 8 einer Knotenvorrichtung (12) des zweiten Typs zuzuordnen ist.

11. Netzwerksystem nach Anspruch 10, wobei das Netzwerksystem ein Beleuchtungssystem umfasst, die Knotenvorrichtungen des ersten Typs Beleuchtungsvorrichtungen umfassen und die Knotenvorrichtungen des zweiten Typs Sensorvorrichtungen umfassen.

12. Netzwerksystem nach Anspruch 11, wobei die Sensorvorrichtungen Bewegungssensoren umfassen.

13. Computerprogrammprodukt, umfassend ein computerlesbares Speicherungsmedium, das Anweisungen speichert, die, wenn sie auf mindestens einem Prozessor ausgeführt werden, der in einer Knotenvorrichtung des ersten Typs enthalten ist, die Knotenvorrichtung des ersten Typs veranlassen, das Verfahren nach einem der vorstehenden Ansprüche 1 bis 8 durchzuführen.

## Revendications

1. Procédé (30) d'association d'un premier type de dispositif de nœud (11) et d'un second type de dispositif de nœud (12, 20) dans un réseau (10), le réseau (10) comprenant une pluralité de premiers types de dispositif de nœud (11) et une pluralité de seconds types de dispositif de nœud (12, 20) fonctionnellement interconnectés les uns avec les autres, chaque premier type de dispositif de nœud (11) et chaque second type de dispositif de nœud (12, 20) comprenant un module de communication sans fil, le procédé étant mis en œuvre par un premier type de dispositif de nœud (11) et comprenant les étapes consistant à :
- recevoir (31) un premier nombre de signaux ayant chacun un niveau de force de signal en provenance d'un second type de dispositif de nœud ;
- calculer (32) un pourcentage de signaux reçus à un niveau de force de signal supérieur à un seuil de force de signal prédéterminé ; et
- associer (34) le premier type de dispositif de nœud au second type de dispositif de nœud si le pourcentage est supérieur à un pourcentage seuil en configurant le premier type de dispositif de nœud pour réagir à des messages provenant du second type de dispositif de nœud ;
dans lequel le procédé comprend en outre les étapes consistant à :
- comparer un niveau de force de signal d'un signal supplémentaire reçu en provenance du second type de dispositif de nœud,
- déterminer que le niveau de force de signal du signal supplémentaire reçu est différent de niveaux de force de signal de signaux précédemment reçus au moins d'une quantité déterminée ;
- répéter les étapes de calcul (32) et d'association (34) pour un second nombre de signaux provenant du second type de dispositif de nœud.

2. Procédé selon la revendication 1, dans lequel le signal supplémentaire est reçu du second type de dispositif de nœud en conséquence d'un commutateur d'ajustement de puissance de transmission (230) du second type de dispositif de nœud étant actionné.

3. Procédé selon la revendication 1, les premier et second nombres de signaux sont reçus en provenance du second type de dispositif de nœud de façon continue en conséquence d'un bouton de commande (220) du second type de dispositif de nœud étant actionné.

4. Procédé selon la revendication 1, dans lequel l'étape d'association comprend en outre :
l'association du premier type de dispositif de nœud à un nombre de seconds types de dispositif de nœud en configurant le premier type de dispositif de nœud pour réagir à des messages provenant de chacun parmi le nombre de seconds types de dispositif de nœud.

5. Procédé selon la revendication 4, comprenant en outre les étapes consistant à :
- classer une pluralité de signaux reçus respectivement d'une pluralité de seconds types de dispositif de nœud à associer au premier type de dispositif de nœud par ordre décroissant ou ordre croissant selon les niveaux de force de signal de la pluralité de signaux ;
- associer le premier type de dispositif de nœud à un nombre limité de seconds types de dispositif de nœud de classement le plus élevé ou le plus bas de la pluralité de seconds types de dispositif de nœud.

6. Procédé selon la revendication 1, dans lequel chaque premier type de dispositif de nœud est configuré pour communiquer avec chaque second type de dispositif de nœud au moyen d'informations d'identification de dispositif préconfigurées.

7. Procédé selon la revendication 1, dans lequel le module de communication sans fil des premier et second types de dispositif de nœud comprend un module Zigbee ou un module Bluetooth basse énergie, BLE, et le niveau de force de signal comprend un indicateur de force de signal reçu, RSSI.

8. Procédé selon la revendication 1, dans lequel le premier type de dispositif de nœud comprend des dispositifs d'éclairage et le second type de dispositif de nœud comprend des dispositifs capteurs, en particulier, des capteurs de mouvement.

9. Dispositif d'éclairage agencé pour mettre en œuvre le procédé selon l'une quelconque des revendications 1 à 8 précédentes.

10. Système de réseau (10) comprenant une pluralité de premiers types de dispositif de nœud (11) et une pluralité de seconds types de dispositif de nœud (12) fonctionnellement interconnectés les uns avec les autres, chaque premier type de dispositif de nœud (11) et chaque second type de dispositif de nœud (12) comprenant un module de communication sans fil, dans lequel un premier type de dispositif de nœud (11) est agencé pour être associé à un second type de dispositif de nœud (12) conformément au procédé selon l'une quelconque des revendications 1 à 8 précédentes.

11. Système de réseau selon la revendication 10, le système de réseau comprend un système d'éclairage, le premier type de dispositif de nœud comprend des dispositifs d'éclairage, le second type de dispositif de nœud comprend des dispositifs capteurs.

12. Système de réseau selon la revendication 11, dans lequel les dispositifs capteurs comprennent des capteurs de mouvement.

13. Produit programme d'ordinateur, comprenant un support de stockage lisible par ordinateur stockant des instructions qui, lorsqu'elles sont exécutées sur au moins un processeur compris dans un premier type de dispositif de nœud, amènent ledit premier type de dispositif de nœud à effectuer le procédé selon l'une quelconque des revendications 1 à 8 précédentes.
